# FASCICULE DE BREVET EUROPEEN

(11) **EP 2 765 739 B1**
(45) Date de publication et mention de la délivrance du brevet: **29.06.2016**
(21) Numéro de dépôt: 14152985.9
(22) Date de dépôt: 29.01.2014
(51) Int. Cl.: H04L 12/24, H04W 8/08, H04W 8/26

(54) **Localisation de terminaux mobiles**
Aufenthaltsort von mobilen Endgeräten
Location of mobile terminals

(30) Priorité: 12.02.2013 FR 1351196
(43) Date de publication de la demande: 13.08.2014
(73) Titulaire: Streamwide, 75010 Paris (FR)
(72) Inventeur: Previtali, Florent, 75018 Paris (FR); Grandjean, Mathieu, 93100 Montreuil (FR)
(74) Mandataire: Cabinet Plasseraud

(56) Documents cités:
- WO-A1-01/69948
- WO-A1-2007/145552
- US-A1- 2007 177 530

## Description

La présente invention est relative à la localisation de terminaux mobiles par un serveur d'enregistrement, et à l'enregistrement et la synchronisation d'un terminal mobile avec un système de localisation de terminaux mobiles.

Les utilisateurs de terminaux mobiles comme par exemple les téléphones mobiles, les Smartphones et les tablettes numériques utilisent de façon croissante des fonctionnalités de messagerie par internet, ceci afin, en particulier, de réduire les coûts liés aux échanges de messages par les réseaux cellulaires et d'accéder à des fonctionnalités étendues permises par l'usage du réseau internet.

Dans un tel système de messagerie, chaque terminal mobile est enregistré auprès d'un serveur d'enregistrement qui sert de relai de communication et il est donc nécessaire, lorsqu'un terminal mobile A souhaite transmettre un message à un terminal mobile Z, que le serveur d'enregistrement, auprès duquel est enregistré le terminal mobile A, localise le serveur d'enregistrement auprès duquel est enregistré le terminal mobile Z pour lui transmettre le message.

Une telle localisation est usuellement réalisée au moyen d'un système de localisation de terminaux mobiles qui est donc un système subissant une très forte charge lors de l'utilisation du service.

Il est ainsi avantageux de repartir le fonctionnement de ce système sur plusieurs serveurs.

A cette fin, on connait des architectures de type système de noms de domaine ou « DNS » (utilisées par exemple sur le réseau internet) qui consistent en une arborescence dans laquelle un serveur à localiser est identifié au moyen d'un nom de domaine représentant le chemin à parcourir en sens inverse, par exemple « trac.mgm.streamwide.com ».

On connait également des architectures de type réseau téléphonique, dans lesquelles les communications sont dirigées en identifiant des préfixes de numéros de téléphone.

De telles architectures fonctionnent par préfixes et/ou suffixes et réalisent donc une répartition des utilisateurs en fonction d'un numéro de téléphone ou d'un nom de domaine.

En conséquence, ces systèmes ne permettent pas de transférer aisément des utilisateurs d'un serveur d'enregistrement à un autre puisque l'adresse (nom de domaine ou numéro de téléphone) est inscrite en mémoire et conditionne le routage à effectuer.

La possibilité de transférer des terminaux mobiles entre plusieurs serveurs d'enregistrement de façon dynamique (« à la volée ») est utile par exemple lors de phases de montée en charge du système de messagerie mais également pour optimiser la répartition en fonctionnement car elle permet d'organiser au mieux les requêtes de localisation et le routage des messages, par exemple en enregistrant des terminaux mobiles qui communiquent fréquemment ensemble sur un même serveur d'enregistrement ou des serveurs d'enregistrement voisins.

Il existe donc un besoin pour un système de localisation de terminaux mobiles permettant un transfert aisé des terminaux mobiles entre serveurs d'enregistrement ainsi qu'une répartition des terminaux mobiles entre les serveurs d'enregistrement en fonction d'un ensemble de critères plus larges qu'un simple numéro de téléphone ou nom de domaine, par exemple en fonction du type de terminal mobile, de l'application de messagerie disponible sur le terminal mobile, de la charge des serveurs d'enregistrement, etc.

Les documents US 2007/177530 A1 et WO 01/69948 A1 décrivent des architectures de serveurs de localisation utilisées dans le cadre de réseau sans-fil regroupant un certain nombre de sous-réseaux sans-fils. Dans de telles architectures, la localisation d'un terminal mobile est mise en oeuvre par une approche descendante depuis les serveurs pères de plus haut niveau jusqu'aux serveurs fils, ce qui implique en particulier de nombreux appels aux serveurs pères de haut niveau.

La présente invention vient améliorer la situation.

Elle propose à cet effet un système de localisation de terminaux mobiles comprenant une pluralité de serveurs d'enregistrement et une pluralité de serveurs de localisation. Chaque serveur d'enregistrement est adapté pour communiquer avec plusieurs terminaux mobiles enregistrés auprès du serveur d'enregistrement, pour effectuer un relai de communication. Les serveurs d'enregistrement et les serveurs de localisation sont aptes à communiquer entre eux via un réseau étendu et sont organisés selon un arbre hiérarchique de serveurs parents et de serveurs fils de telle sorte que :
- chaque serveur d'enregistrement possède un unique serveur parent constitué par un serveur de localisation;
- chaque serveur de localisation possède soit un unique serveur parent constitué par un serveur de localisation, soit aucun serveur parent ;
- au moins un serveur de localisation parmi la pluralité de serveurs de localisation possède un serveur parent.

Chaque serveur de localisation comporte une base de données de terminaux mobiles constituée d'une pluralité d'enregistrements de terminal mobile. Chacun de ces enregistrements de terminal mobile comprend des données d'adresse d'un terminal mobile enregistré auprès d'un serveur d'enregistrement descendant du serveur de localisation dans l'arbre hiérarchique.

Ainsi, une telle arborescence permet avantageusement de localiser un terminal dans un serveur parent si les données d'adresses de ce terminal ne sont pas présentes dans la base du serveur relié directement au terminal.

Dans une forme de réalisation, les données d'adresse d'un terminal mobile comprennent une adresse, sur le réseau étendu, d'un serveur d'enregistrement auprès duquel est enregistré ce terminal mobile.

Dans une réalisation, un unique serveur de localisation ne possède pas de serveur parent et constitue ainsi un serveur de localisation racine.

Dans une forme de réalisation, un serveur de localisation, père dans l'arbre hiérarchique, comporte tous les enregistrements contenus dans un serveur de localisation ou d'enregistrement, en aval de ce serveur de localisation père dans l'arbre hiérarchique.

La présente invention vise aussi un procédé de localisation d'un terminal mobile par un serveur d'enregistrement d'un système de localisation de terminaux mobiles au sens de l'invention. Le procédé comprend une détermination locale pour déterminer si un terminal mobile recherché est enregistré auprès d'un serveur d'enregistrement, et, si le terminal mobile recherché n'est pas enregistré auprès du serveur d'enregistrement, une première étape de détermination régionale pour déterminer si la base de données de terminaux mobiles d'un premier serveur de localisation constituant l'unique serveur parent du serveur d'enregistrement comporte un enregistrement de terminal mobile comprenant des données d'adresse du terminal mobile recherché.

En outre, si la base de données de terminaux mobiles du premier serveur de localisation comporte un enregistrement de terminal mobile comprenant des données d'adresse du terminal mobile recherché, le premier serveur de localisation transmet cet enregistrement au serveur d'enregistrement.

En revanche, si la base de données de terminaux mobiles du premier serveur de localisation ne comporte pas un enregistrement de terminal mobile comprenant des données d'adresse du terminal mobile recherché, une deuxième étape de détermination régionale consistant à déterminer si la base de données de terminaux mobiles d'un deuxième serveur de localisation constituant l'unique serveur, parent, du premier serveur de localisation comporte un enregistrement de terminal mobile comprenant des données d'adresse du terminal mobile recherché.

On entend par « détermination régionale », par opposition à une détermination locale, une détermination effectuée auprès d'un serveur parent, au-dessus d'un ou plusieurs serveurs en aval dans l'arborescence.

Dans une réalisation, la deuxième étape de détermination régionale est réitérée une ou plusieurs fois en remontant l'arbre hiérarchique, l'ensemble des étapes de détermination régionale constituant un ensemble de n-ièmes étapes de détermination régionale. Chaque n-ième étape de détermination régionale consiste à déterminer si la base de données de terminaux mobiles d'un n-ième serveur de localisation constituant l'unique serveur parent d'un (n-1)-ième serveur comporte un enregistrement de terminal mobile comprenant des données d'adresse du terminal mobile recherché. La réitération des n-ièmes étapes de détermination régionale est alors stoppée lorsque la base de données de terminaux mobiles d'un n-ième serveur de localisation comporte un enregistrement de terminal mobile comprenant des données d'adresse du terminal mobile recherché.

Dans une réalisation, si le terminal mobile recherché n'est pas enregistré auprès d'un (n-1)-ième serveur de localisation lors d'une (n-1)-ième étape de détermination régionale, le n-1-ième serveur de localisation transmet au n-ième serveur de localisation, constituant son unique parent, une requête de localisation.

En variante, si le terminal mobile recherché n'est pas enregistré auprès d'un (n-1)-ième serveur de localisation lors d'une (n-1)-ième étape de détermination régionale, le (n-1)-ième serveur de localisation transmet au serveur d'enregistrement une adresse, sur le réseau étendu, du n-ième serveur de localisation constituant son unique parent, et le serveur d'enregistrement émet une requête de localisation au n-ième serveur de localisation.

Dans une réalisation plus générale, lorsque la base de données de terminaux mobiles d'un serveur de localisation comporte un enregistrement de terminal mobile comprenant des données d'adresse du terminal mobile recherché, une base de données locale du serveur d'enregistrement est avantageusement mise à jour avec cet enregistrement de terminal mobile et,
l'étape de détermination locale pour déterminer si un terminal mobile recherché est enregistré auprès d'un serveur d'enregistrement comporte également l'opération de déterminer si la base de données locale du serveur d'enregistrement comporte un enregistrement de terminal mobile comprenant des données d'adresse du terminal mobile recherché.

La présente invention vise aussi un procédé d'enregistrement d'un terminal mobile dans un système de localisation de terminaux mobiles, le procédé comprenant :
- une étape d'enregistrement local d'un terminal mobile à enregistrer auprès d'un serveur d'enregistrement ;
- une première étape d'enregistrement régional du terminal mobile à enregistrer dans la base de données de terminaux mobiles d'un premier serveur de localisation constituant l'unique serveur parent du serveur d'enregistrement ; et
- une deuxième étape d'enregistrement régional du terminal mobile à enregistrer dans la base de données de terminaux mobiles d'un deuxième serveur de localisation constituant l'unique serveur parent du premier serveur de localisation.

Une telle réalisation permet de façon particulièrement avantageuse de synchroniser les données sur les terminaux, partagées par les serveurs, et de mettre à jour ainsi dynamiquement des données de localisation des terminaux.

Dans une forme de réalisation, la deuxième étape d'enregistrement précitée est réitérée une ou plusieurs fois en remontant l'arbre hiérarchique, l'ensemble des étapes d'enregistrement régionale constituant un ensemble de n-ièmes étapes d'enregistrement régionale. Chaque n-ième étape d'enregistrement régional consiste alors à enregistrer le terminal mobile à enregistrer dans la base de données de terminaux mobiles d'un n-ième serveur de localisation constituant l'unique serveur parent d'un n-1-ième serveur de localisation. La réitération des n-ièmes étapes d'enregistrement régionale est ensuite stoppée lorsqu'un n-ième serveur de localisation n'a pas de serveur parent.

Dans une forme de réalisation, chaque étape d'enregistrement régional comprend l'émission d'une requête d'enregistrement de terminal mobile d'un premier serveur au second serveur constituant l'unique parent du premier serveur.

Dans une forme de réalisation, chaque étape d'enregistrement régional comprend l'émission d'une requête d'enregistrement de terminal mobile du serveur d'enregistrement à un serveur de localisation.

Dans une réalisation, le procédé d'enregistrement de terminal mobile comporte en outre une étape d'assignation, réalisée préalablement à la première étape d'enregistrement, et comportant la transmission d'une requête d'assignation depuis le terminal mobile à un serveur de localisation puis la réception sur le terminal mobile d'une adresse, sur le réseau étendu, d'un serveur d'enregistrement. L'étape d'enregistrement local comporte alors l'enregistrement du terminal mobile auprès du serveur d'enregistrement.

La présente invention vise aussi un procédé de synchronisation d'un terminal mobile avec un système de localisation de terminaux mobiles selon l'invention, le procédé comprenant :
- une étape de transfert d'une pluralité d'enregistrements de carnet d'adresses depuis un terminal mobile à synchroniser à un serveur d'enregistrement, au moins l'un desdits enregistrements de carnet d'adresses comportant un identifiant de terminal mobile contact;
- une étape de tri de carnet d'adresses pour déterminer, pour chaque enregistrement de carnet d'adresses comportant un identifiant de terminal mobile contact, si la base de données de terminaux mobiles d'un serveur de localisation comporte un enregistrement de terminal mobile comprenant des données d'adresses du terminal mobile contact, pour définir des informations de terminal mobile contact ; et
- une étape de mise à jour comportant la transmission des informations de terminal mobile contact au terminal mobile à synchroniser.

D'autres caractéristiques et avantages de l'invention apparaîtront à la lecture de la description et à l'examen des dessins sur lesquels:
- la figure 1 est un ordinogramme d'un système de localisation de terminaux mobiles selon un mode de réalisation de l'invention ;
- la figure 2 est un organigramme d'un procédé de localisation d'un terminal mobile par un serveur d'enregistrement d'un système de localisation de terminaux mobiles, selon des modes de réalisation de l'invention;
- la figure 3 est un organigramme d'un procédé d'enregistrement d'un terminal mobile dans un système de localisation de terminaux mobiles, selon l'invention;
- la figure 4 est un organigramme d'un procédé de synchronisation d'un terminal mobile avec un système de localisation de terminaux mobiles, selon l'invention;

Sur les différentes figures, les mêmes références désignent des éléments identiques ou similaires.

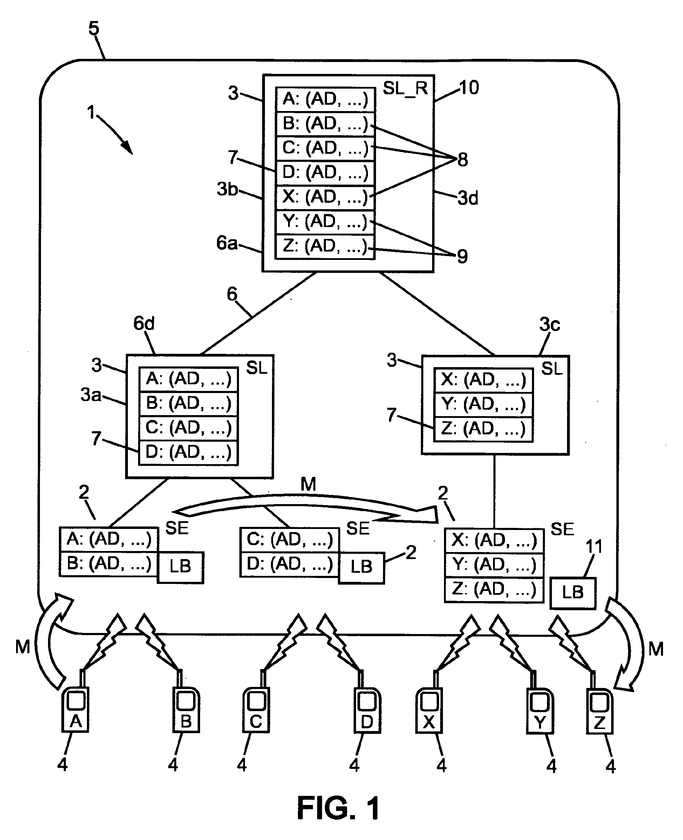

Sur la figure 1 est illustré un mode de réalisation d'un système 1 de localisation de terminaux mobiles selon l'invention. Ce système comprend une pluralité de serveurs d'enregistrement 2 et une pluralité de serveurs de localisation 3.

Chaque serveur d'enregistrement 2 est adapté pour communiquer avec une pluralité de terminaux mobiles 4 enregistrés auprès dudit serveur d'enregistrement 2 pour un relai de communication.

Chaque serveur d'enregistrement 2 peut communiquer avec la pluralité de terminaux mobiles 4 enregistré auprès de lui directement par l'intermédiaire d'un réseau cellulaire ou par l'intermédiaire d'un serveur faisant le relai avec un réseau cellulaire.

Les terminaux mobiles 4 n'étant généralement pas capables de communiquer directement entre eux par l'intermédiaire d'un réseau étendu comme internet, les serveurs d'enregistrements 2 réalisent des relais de communication pour permettre aux terminaux mobiles 4 d'échanger des messages via le réseau étendu 5.

Les serveurs d'enregistrement 2 sont aptes à communiquer entre eux via un réseau étendu 5 qui est par exemple un réseau internet ou intranet.

Ainsi, lorsqu'un terminal mobile A souhaite envoyer un message M à un terminal mobile Z, le serveur d'enregistrement 2 auprès duquel est enregistré le terminal mobile A reçoit le message M du terminal mobile A et le transmet au serveur d'enregistrement 2 auprès duquel est enregistré le terminal mobile Z qui le transmet au terminal mobile Z.

Le serveur d'enregistrement 2 du terminal mobile A doit donc tout d'abord obtenir l'adresse AD, sur le réseau étendu 5, du serveur d'enregistrement 2 auprès duquel est enregistré le terminal mobile Z.

A cette fin, les serveurs d'enregistrement 2 sont aptes à communiquer avec des serveurs de localisation 3, par exemple via le réseau étendu 5.

Chaque serveur de localisation 3 comporte une base de données 7 de terminaux mobiles constituée d'une pluralité d'enregistrements de terminal mobile 8 comme détaillé ci-après.

Chaque enregistrement de terminal mobile 8 est associé à un terminal mobile 4 enregistré auprès d'un serveur d'enregistrement 2.

Un enregistrement de terminal mobile 8 comprend en particulier des données d'adresse 9 du terminal mobile 4 associé.

Les données d'adresse 9 du terminal mobile associé 4 comprennent l'adresse AD, sur le réseau étendu 5, du serveur d'enregistrement 2 auprès duquel est enregistré ledit terminal mobile 4.

Les enregistrements de terminal mobile 8 peuvent également comporter d'autres informations relatives au terminal mobile 4 associé et par exemple le type de terminal, des informations relatives au terminal mobile 4, par exemple le numéro de téléphone, des informations relatives à l'application de messagerie par internet installée sur le terminal mobile, etc.

Les serveurs d'enregistrement 2 et les serveurs de localisation 3 sont en outre organisés en un arbre hiérarchique 6 de serveurs parents 6a et de serveurs fils 6b.

L'arbre hiérarchique 6, aussi appelé« arborescence », ou encore « arborescence hiérarchique » est tel que :
- chaque serveur d'enregistrement 2 possède un unique serveur parent 6a constitué par un serveur de localisation 3 ;
- chaque serveur de localisation 3 possède soit un unique serveur parent 6a constitué par un serveur de localisation 3, soit pas de serveur parent 6a ;
- au moins un serveur de localisation 3 parmi la pluralité de serveurs de localisation 3 possède un serveur parent 6a

Les serveurs fils 6b sont les réciproques des serveurs parents 6a, c'est à dire que si un serveur A a pour serveur parent 6a un serveur B, le serveur A est un serveur fils 6b du serveur B et réciproquement.

De cette façon, chaque serveur de localisation 3 possède un ou plusieurs serveurs fils 6b, lesdits serveurs fils 6b étant des serveurs de localisation 3 et/ou des serveurs d'enregistrement 2.

Les serveurs de l'arborescence 6 n'ayant pas de serveurs fils 6b sont appelés « feuilles ».

Les serveurs de l'arborescence 6 forment des « branches » constituées par les liens entre un serveur parent et un serveur fils.

Dans le mode de réalisation de la figure 1, les serveurs d'enregistrement 2 n'ont pas de serveurs fils 6b et constituent donc les « feuilles » de l'arbre hiérarchique 6.

Comme mentionné ci-avant, chaque serveur de localisation 3 comporte une base de données de terminaux mobiles 7 constituée d'une pluralité d'enregistrements de terminal mobile 8. Chacun des enregistrements de terminal mobile 8 d'un serveur de localisation 3 comprend des données d'adresse 9 d'un terminal mobile 4 enregistré auprès d'un serveur d'enregistrement 2 descendant dudit serveur de localisation 3 dans l'arbre hiérarchique 6.

Par « un serveur A descendant du serveur B dans l'arbre hiérarchique » ou « un serveur A en aval du serveur B dans l'arbre hiérarchique », on entend que le serveur A appartient à la branche de l'arbre hiérarchique 6 descendant à partir du serveur B jusqu'aux feuilles de l'arbre hiérarchique 6, c'est-à-dire que le serveur A est un serveur fil du serveur B ou un serveur fils d'un serveur fils du serveur B ou un serveur fils d'un serveur fils d'un serveur fils du serveur B, etc.

Chaque serveur de localisation 3 comporte ainsi, dans sa base de données 7 de terminaux mobiles, tous les enregistrements 8 contenus dans la base de données de terminaux mobiles d'un serveur situé en aval dudit serveur de localisation 3 dans l'arborescence 6.

Dans un mode de réalisation, chaque serveur de localisation 3 peut comporter l'ensemble des enregistrements 8 contenus dans chaque serveur situé en aval dudit serveur de localisation 3 dans l'arborescence 6.

Dans un mode de réalisation de l'invention, chaque serveur de localisation 3 comporte uniquement l'ensemble des enregistrements 8 contenus dans chaque serveur situé en aval dudit serveur de localisation 3 dans l'arborescence 6. De cette façon, les bases de données 7 sont de tailles réduites.

Dans le mode de réalisation de la figure 1, un unique serveur de localisation 10 ne possède pas de serveur parent 6a et constitue le serveur de localisation racine 10.

Dans un mode de réalisation, le serveur de localisation racine 10 comporte l'ensemble des enregistrements 8 contenus dans chaque serveur de l'arborescence 6.

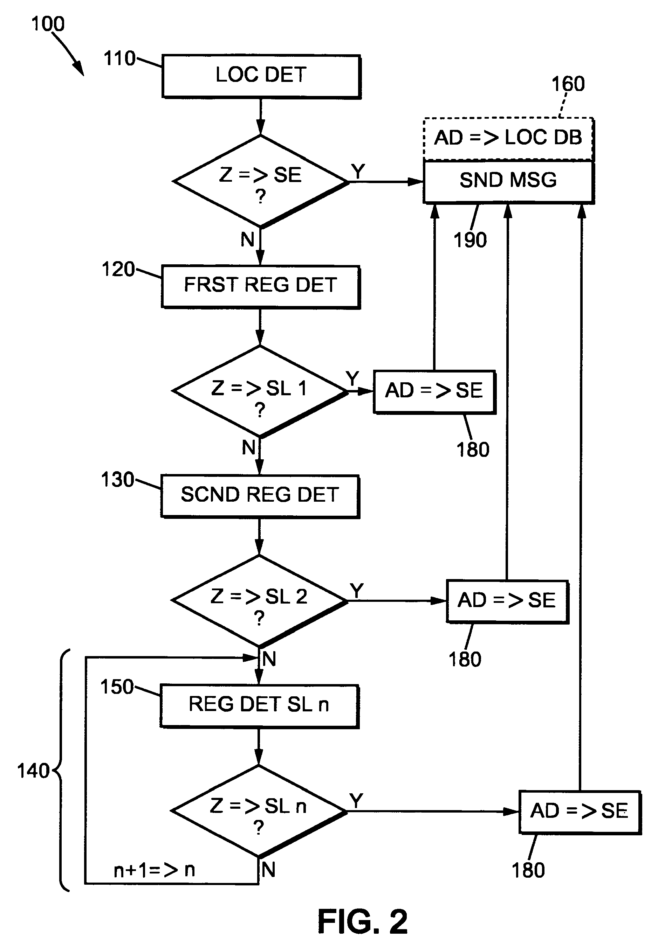

Sur la figure 2 est illustré un procédé de localisation 100 d'un terminal mobile 4 par un serveur d'enregistrement 2 d'un système de localisation de terminaux mobiles selon un mode de réalisation de l'invention.

Dans le mode de réalisation de la figure 2, le procédé comprend une première étape de détermination locale 110 pour déterminer si un terminal mobile recherché Z est enregistré auprès d'un serveur d'enregistrement 2.

Ce serveur d'enregistrement 2 est par exemple le serveur d'enregistrement auprès duquel est enregistré un terminal mobile A souhaitant envoyer un message M à un terminal mobile recherché Z.

Si le terminal mobile recherché Z est enregistré auprès du serveur d'enregistrement 2, les deux terminaux mobiles A, Z sont donc enregistrés auprès du même serveur d'enregistrement 2 et il n'est pas nécessaire que le serveur d'enregistrement 2 communique par l'intermédiaire du réseau étendu 5 avec un autre serveur d'enregistrement 2 pour transmettre le message M entre le terminal mobile A et le terminal Z.

Le message M est alors transmis 190 du terminal mobile A au terminal mobile Z.

Si le terminal mobile recherché Z n'est pas enregistré auprès du serveur d'enregistrement 2, le procédé comprend une première étape de détermination régionale 120 pour déterminer si la base de données 7 de terminaux mobiles d'un premier serveur de localisation 3a constituant l'unique serveur parent 6a du serveur d'enregistrement 2 comporte un enregistrement de terminal mobile 8 comprenant des données d'adresse 9 du terminal mobile recherché Z.

Si la base de données 7 de terminaux mobiles du premier serveur de localisation 3a comporte un enregistrement de terminal mobile 8 comprenant des données d'adresse 9 du terminal mobile recherché Z, le premier serveur de localisation 3a transmet 180 ledit enregistrement, ou les données d'adresse contenues dans ledit enregistrement au serveur d'enregistrement 2.

Le serveur d'enregistrement 2 est alors en possession de l'adresse AD sur le réseau étendu 5 du serveur d'enregistrement 2 auprès duquel est enregistré le terminal mobile recherché Z et peut servir de relai de communication.

Si la base de données 7 de terminaux mobiles du premier serveur de localisation 3a ne comporte pas un enregistrement de terminal mobile associé au terminal mobile recherché Z, il est nécessaire de remonter plus haut dans l'arbre hiérarchique 6.

Le procédé de localisation de la figure 2 comporte ainsi une deuxième étape de détermination régionale 130 consistant à déterminer si la base de données 7 de terminaux mobiles d'un deuxième serveur de localisation 3b, constituant l'unique serveur parent du premier serveur de localisation 3a, comporte un enregistrement de terminal mobile 8 associé au terminal mobile recherché Z.

La deuxième étape de détermination régionale 130 peut être réitérée une ou plusieurs fois en remontant l'arbre hiérarchique 6, c'est-à-dire en déterminant à chaque réitération si le serveur parent du serveur examiné à l'itération précédente comporte une enregistrement associé au terminal mobile recherché.

L'ensemble des étapes de détermination régionale 130 constitue un ensemble 140 de n-ièmes étapes de détermination régionale 150.

Chaque n-ième étape de détermination régionale 150 consiste donc à déterminer si la base de données 7 de terminaux mobiles d'un n-ième serveur de localisation 3d, constituant l'unique serveur parent d'un (n-1)-ième serveur 3c, comporte un enregistrement 8 de terminal mobile comprenant des données d'adresse 9 du terminal mobile recherché Z.

La réitération des n-ièmes étapes de détermination régionale 150 est stoppée lorsque la base de données 7 de terminaux mobiles d'un n-ième serveur de localisation 3d comporte un enregistrement de terminal mobile comprenant des données d'adresse du terminal mobile recherché.

Dans un premier mode de réalisation du procédé de localisation d'un terminal mobile, si le terminal mobile recherché Z n'est pas enregistré dans la base de données 7 d'un (n-1)-ième serveur de localisation 3c, lors d'une (n-1)-ième étape de détermination régionale, le n-1-ième serveur de localisation 3c transmet au n-ième serveur de localisation 3d, constituant son unique parent, une requête de localisation RL.

Dans un second mode de réalisation du procédé de localisation d'un terminal mobile, si le terminal mobile recherché Z n'est pas enregistré dans la base de donnée 7 d'un (n-1)-ième serveur de localisation 3c, lors d'une (n-1)-ième étape de détermination régionale, le (n-1)-ième serveur de localisation 3c transmet au serveur d'enregistrement 2 une adresse AD, sur le réseau étendu 5, du n-ième serveur de localisation 3d constituant son unique parent, et le serveur d'enregistrement 2 émet une requête de localisation RL au n-ième serveur de localisation 3d.

Dans une variante de réalisation du procédé de localisation d'un terminal mobile selon l'invention, lorsque la base de données 7 de terminaux mobiles d'un serveur de localisation 3 comporte un enregistrement 8 de terminal mobile comprenant des données d'adresse 9 du terminal mobile recherché Z, une base de donnée local 11 du serveur d'enregistrement 2 est mise à jour 160 avec ledit enregistrement 8 de terminal mobile.

Dans cette variante de réalisation, l'étape de détermination locale 110, pour déterminer si un terminal mobile recherché est enregistré auprès d'un serveur d'enregistrement, comporte également une détermination si la base de données locale 11 du serveur d'enregistrement comporte un enregistrement de terminal mobile comprenant des données d'adresse du terminal mobile recherché.

De cette façon, les adresses des serveurs d'enregistrement 2 communiquant fréquemment ensemble peuvent être mémorisées dans une base de données locale réalisant un cache, de façon à accélérer la procédure de localisation.

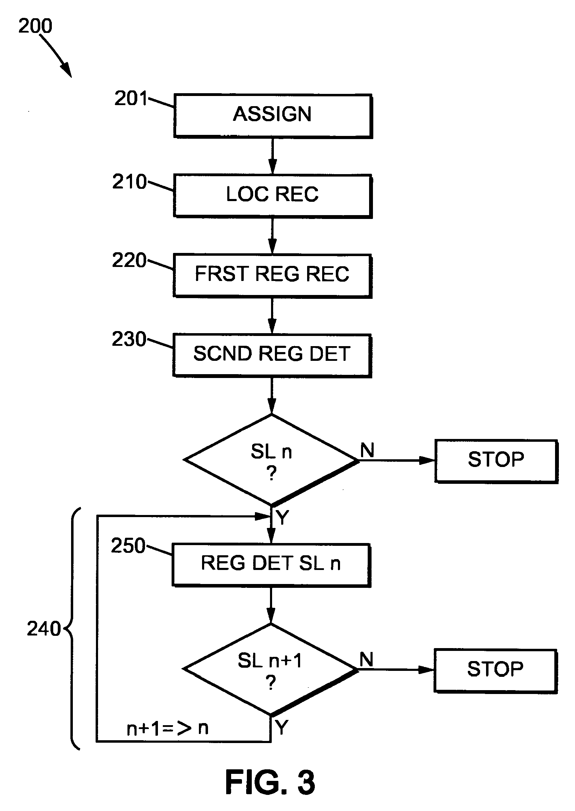

Sur la figure 3 est illustré un procédé d'enregistrement 200 d'un terminal mobile 4 dans un système de localisation 1 de terminaux mobiles 4.

Dans le mode de réalisation illustré figure 3, le procédé comprend tout d'abord une étape d'enregistrement local 210 d'un terminal mobile A à enregistrer auprès d'un serveur d'enregistrement 2.

Au cours de cette étape, le terminal mobile A s'enregistre auprès d'un serveur d'enregistrement 2. Le serveur d'enregistrement 2 peut alors constituer un relai de communication pour l'échange des messages M sur le réseau étendu 5 depuis le terminal mobile A.

Le procédé d'enregistrement 200 comporte également une première étape d'enregistrement régional 220 du terminal mobile A à enregistrer dans la base de données 7 de terminaux mobiles d'un premier serveur de localisation 3a constituant l'unique serveur parent 6a du serveur d'enregistrement 2.

Le procédé d'enregistrement 200 comporte en outre une deuxième étape d'enregistrement régional 230 du terminal mobile A à enregistrer dans la base de données de terminaux mobiles d'un deuxième serveur de localisation 3b qui constitue l'unique serveur parent 6a du premier serveur de localisation 3a.

Dans le procédé d'enregistrement 200 de la figure 3, la deuxième étape d'enregistrement régional 230 est réitérée une ou plusieurs fois en remontant l'arbre hiérarchique 6, l'ensemble des étapes d'enregistrement régionale constituant un ensemble 240 de n-ièmes étapes d'enregistrement régionale 250.

Chaque n-ième étape d'enregistrement régional 250 consiste à enregistrer le terminal mobile A à enregistrer dans la base de données 7 de terminaux mobiles 4 d'un n-ième serveur de localisation 3d constituant l'unique serveur parent 6a d'un n-1-ième serveur de localisation 3c.

La réitération des n-ièmes étapes d'enregistrement régionale est stoppée lorsqu'un n-ième serveur de localisation 3d n'a pas de serveur parent.

Ce n-ième serveur de localisation 3d peut par exemple être le serveur de localisation racine 10.

Dans un premier mode de réalisation d'un procédé d'enregistrement 200 selon l'invention, chaque étape d'enregistrement régional 250 comprend l'émission d'une requête d'enregistrement RE de terminal mobile d'un premier serveur au second serveur constituant l'unique parent 6a du premier serveur.

De cette façon, le terminal mobile à enregistrer est enregistré de façon récursive en remontant l'arborescence 6.

Dans un second mode de réalisation d'un procédé d'enregistrement 200 selon l'invention, chaque étape d'enregistrement régional 250 comprend l'émission d'une requête d'enregistrement RE de terminal mobile du serveur d'enregistrement 2 à un serveur de localisation 3.

Dans ce second mode de réalisation, le terminal mobile A à enregistrer est enregistré directement par le serveur d'enregistrement 2 à chaque niveau de l'arborescence 6.

Dans un mode de réalisation, le procédé d'enregistrement 200 selon l'invention peut comporter en outre une étape d'assignation 201, réalisée préalablement à l'étape d'enregistrement local 210.

Cette étape d'assignation 201 comporte la transmission d'une requête d'assignation RA depuis le terminal mobile A à un serveur de localisation 3.

Ce serveur de localisation 3 peut avantageusement être le serveur de localisation racine 10. De cette façon, le terminal mobile A peut seulement avoir à connaître une adresse unique sur le réseau étendu 5, celle du serveur de localisation racine 10, pour s'enregistrer auprès du système de localisation.

L'étape d'assignation 201 comporte ensuite la réception sur le terminal mobile A d'une adresse AD, sur le réseau étendu 5, d'un serveur d'enregistrement 2 apte à enregistrer le terminal mobile A.

Dans ce mode de réalisation, l'étape d'enregistrement local 210 comporte alors l'enregistrement du terminal mobile A auprès du serveur d'enregistrement 2 dont l'adresse AD a été transmise au terminal mobile A.

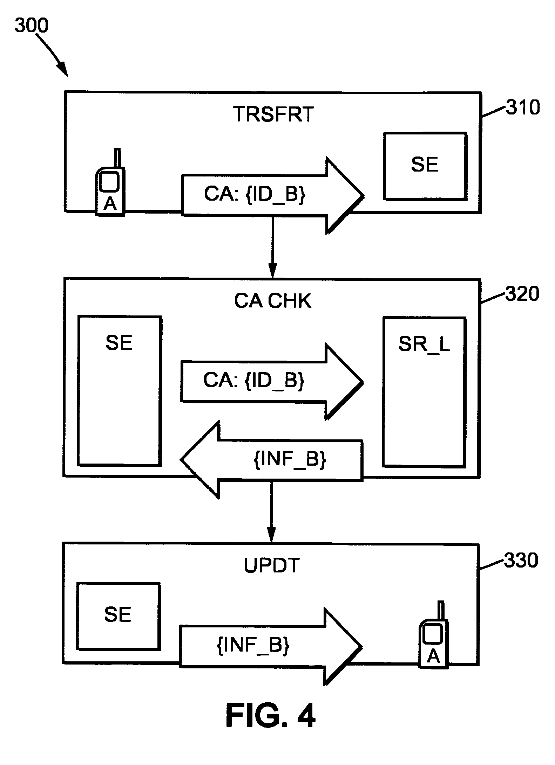

Enfin, la figure 4 illustre un procédé de synchronisation 300 d'un terminal mobile A avec un système de localisation 1 de terminaux mobiles.

Le procédé de synchronisation 300 comprend une étape de transfert 310 d'une pluralité d'enregistrements de carnet d'adresses CA depuis un terminal mobile à synchroniser A à un serveur d'enregistrement 2.

Le serveur d'enregistrement 2 est par exemple le serveur d'enregistrement 2 auprès duquel le terminal mobile A est enregistré.

Au moins un des enregistrements de carnet d'adresses CA comporte un identifiant ID_B de terminal mobile contact Z.

Un identifiant ID_B de terminal mobile contact Z est par exemple un numéro de téléphone du terminal mobile contact Z.

Le procédé de synchronisation 300 comprend ensuite une étape de tri de carnet d'adresses 320 pour déterminer, pour chaque enregistrement de carnet d'adresses CA comportant un identifiant ID_B de terminal mobile contact Z, si le terminal mobile contact Z est enregistré sur un serveur de localisation 3.

Le serveur de localisation 3 est par exemple le serveur de localisation racine 10. En effet, le serveur de localisation racine 10 comportant, dans un mode de réalisation, l'ensemble des enregistrements 8 contenus dans chaque serveur de l'arborescence 6, et, un terminal mobile contact Z ayant une probabilité faible d'être déjà enregistré auprès d'un serveur de l'arborescence 6, il est économique de transmettre les requêtes directement au serveur de localisation racine 10.

Dans une variante de réalisation, l'étape de tri de carnet d'adresses 320 peut être réalisée en remontant l'arbre hiérarchique 6, c'est-à-dire en déterminant, pour chaque serveur de localisation 3, si le terminal mobile contact Z est enregistré sur ledit serveur. Si le terminal mobile n'est pas enregistré sur ledit serveur de localisation 3, l'opération de détermination est réitérée auprès du serveur parent dudit serveur de localisation.

L'étape de tri de carnet d'adresses 320 peut donc comporter au moins une opération de déterminer si la base de données 7 de terminaux mobiles 4 d'un serveur de localisation 3 comporte un enregistrement 8 de terminal mobile comprenant des données d'adresse 9 du terminal mobile contact Z.

L'étape de tri de carnet d'adresses 320 permet de définir des informations de terminal mobile contact INF_B.

Enfin, le procédé de synchronisation 300 comporte une étape de mise à jour 330 pour transmettre les informations de terminal mobile contact INF_Bau terminal mobile à synchroniser A.

Ainsi, le procédé de synchronisation 300 permet de réaliser une mise à jour du terminal mobile à synchroniser A.

## Revendications

1. Système de localisation de terminaux mobiles comprenant une pluralité de serveurs d'enregistrement et une pluralité de serveurs de localisation,
chaque serveur d'enregistrement étant adapté pour communiquer avec une pluralité de terminaux mobiles enregistrés auprès dudit serveur d'enregistrement, pour un relai de communication,
les serveurs d'enregistrement et les serveurs de localisation étant aptes à communiquer entre eux via un réseau étendu et étant organisés en un arbre hiérarchique de serveurs parents et de serveurs fils de telle sorte que
- chaque serveur d'enregistrement possède un unique serveur parent constitué par un serveur de localisation;
- chaque serveur de localisation possède soit un unique serveur parent constitué par un serveur de localisation, soit pas de serveur parent ;
- au moins un serveur de localisation parmi la pluralité de serveurs de localisation possède un serveur parent ; et
chaque serveur de localisation comportant une base de données de terminaux mobiles constituée d'une pluralité d'enregistrements de terminal mobile, chacun desdits enregistrements de terminal mobile comprenant des données d'adresse d'un terminal mobile enregistré auprès d'un serveur d'enregistrement descendant dudit serveur de localisation dans l'arbre hiérarchique,
**caractérisé en ce qu'**un serveur de localisation, père dans l'arbre hiérarchique, comporte tous les enregistrements contenus dans un serveur de localisation ou d'enregistrement, en aval dudit serveur de localisation père dans l'arbre hiérarchique.

2. Système selon la revendication 1, dans lequel les données d'adresse d'un terminal mobile comprennent une adresse, sur le réseau étendu, d'un serveur d'enregistrement auprès duquel est enregistré ledit terminal mobile.

3. Système selon l'une quelconque des revendications 1 et 2, dans lequel un unique serveur de localisation ne possède pas de serveur parent et constitue un serveur de localisation racine.

4. Procédé de localisation d'un terminal mobile par un serveur d'enregistrement d'un système de localisation de terminaux mobiles selon l'une quelconque des revendications 1 à 3, le procédé comprenant une détermination locale pour déterminer si un terminal mobile recherché est enregistré auprès d'un serveur d'enregistrement, et, si le terminal mobile recherché n'est pas enregistré auprès du serveur d'enregistrement, une première étape de détermination régionale pour déterminer si la base de données de terminaux mobiles d'un premier serveur de localisation constituant l'unique serveur parent du serveur d'enregistrement comporte un enregistrement de terminal mobile comprenant des données d'adresse du terminal mobile recherché; et
- si la base de données de terminaux mobiles du premier serveur de localisation comporte un enregistrement de terminal mobile comprenant des données d'adresse du terminal mobile recherché, le premier serveur de localisation transmet ledit enregistrement au serveur d'enregistrement ;
- si la base de données de terminaux mobiles du premier serveur de localisation ne comporte pas un enregistrement de terminal mobile comprenant des données d'adresse du terminal mobile recherché, une deuxième étape de détermination régionale consistant à déterminer si la base de données de terminaux mobiles d'un deuxième serveur de localisation constituant l'unique serveur parent du premier serveur de localisation comporte un enregistrement de terminal mobile comprenant des données d'adresse du terminal mobile recherché.

5. Procédé de localisation d'un terminal mobile selon la revendication 4,
dans lequel la deuxième étape de détermination régionale est réitérée une ou plusieurs fois en remontant l'arbre hiérarchique, l'ensemble des étapes de détermination régionale constituant un ensemble de n-ièmes étapes de détermination régionale,
chaque n-ième étape de détermination régionale consistant à déterminer si la base de données de terminaux mobiles d'un n-ième serveur de localisation constituant l'unique serveur parent d'un (n-1)-ième serveur comporte un enregistrement de terminal mobile comprenant des données d'adresse du terminal mobile recherché,
la réitération des n-ièmes étapes de détermination régionale étant stoppée lorsque la base de données de terminaux mobiles d'un n-ième serveur de localisation comporte un enregistrement de terminal mobile comprenant des données d'adresse du terminal mobile recherché.

6. Procédé de localisation d'un terminal mobile selon la revendication 4 ou 5, dans lequel si le terminal mobile recherché n'est pas enregistré auprès d'un (n-1)-ième serveur de localisation lors d'une (n-1)-ième étape de détermination régionale,
le n-1-ième serveur de localisation transmet au n-ième serveur de localisation, constituant son unique parent, une requête de localisation.

7. Procédé de localisation d'un terminal mobile selon la revendication 4 ou 5, dans lequel si le terminal mobile recherché n'est pas enregistré auprès d'un (n-1)-ième serveur de localisation lors d'une (n-1)-ième étape de détermination régionale,
le (n-1)-ième serveur de localisation transmet au serveur d'enregistrement une adresse, sur le réseau étendu, du n-ième serveur de localisation constituant son unique parent, et le serveur d'enregistrement émet une requête de localisation au n-ième serveur de localisation.

8. Procédé de localisation d'un terminal mobile selon l'une quelconque des revendications 4 à 7, dans lequel, lorsque la base de données de terminaux mobiles d'un serveur de localisation comporte un enregistrement de terminal mobile comprenant des données d'adresse du terminal mobile recherché, une base de données locale du serveur d'enregistrement est mise à jour avec ledit enregistrement de terminal mobile et,
l'étape de détermination locale pour déterminer si un terminal mobile recherché est enregistré auprès d'un serveur d'enregistrement comporte également l'opération de déterminer si la base de données locale du serveur d'enregistrement comporte un enregistrement de terminal mobile comprenant des données d'adresse du terminal mobile recherché.

9. Procédé d'enregistrement d'un terminal mobile dans un système de localisation de terminaux mobiles selon l'une quelconque des revendications 1 à 3, le procédé comprenant :
- une étape d'enregistrement local d'un terminal mobile à enregistrer auprès d'un serveur d'enregistrement ;
- une première étape d'enregistrement régional du terminal mobile à enregistrer dans la base de données de terminaux mobiles d'un premier serveur de localisation constituant l'unique serveur parent du serveur d'enregistrement ; et
- une deuxième étape d'enregistrement régional du terminal mobile à enregistrer dans la base de données de terminaux mobiles d'un deuxième serveur de localisation constituant l'unique serveur parent du premier serveur de localisation,
le procédé comportant en outre une étape d'assignation, réalisée préalablement à la première étape d'enregistrement, et comportant la transmission d'une requête d'assignation depuis le terminal mobile à un serveur de localisation puis la réception sur le terminal mobile d'une adresse, sur le réseau étendu, d'un serveur d'enregistrement,
dans lequel l'étape d'enregistrement local comporte l'enregistrement du terminal mobile auprès dudit serveur d'enregistrement.

10. Procédé d'enregistrement d'un terminal mobile selon la revendication 9,
dans lequel la deuxième étape d'enregistrement est réitérée une ou plusieurs fois en remontant l'arbre hiérarchique, l'ensemble des étapes d'enregistrement régionale constituant un ensemble de n-ièmes étapes d'enregistrement régionale,
chaque n-ième étape d'enregistrement régional consistant à enregistrer le terminal mobile à enregistrer dans la base de données de terminaux mobiles d'un n-ième serveur de localisation constituant l'unique serveur parent d'un n-1-ième serveur de localisation,
la réitération des n-ièmes étapes d'enregistrement régionale étant stoppée lorsqu'un n-ième serveur de localisation n'a pas de serveur parent.

11. Procédé d'enregistrement d'un terminal mobile selon l'une des revendications 9 ou 10,
dans lequel chaque étape d'enregistrement régional comprend l'émission d'une requête d'enregistrement de terminal mobile d'un premier serveur au second serveur constituant l'unique parent dudit premier serveur.

12. Procédé d'enregistrement d'un terminal mobile selon l'une des revendications 9 ou 10,
dans lequel chaque étape d'enregistrement régional comprend l'émission d'une requête d'enregistrement de terminal mobile du serveur d'enregistrement à un serveur de localisation.

13. Procédé de synchronisation d'un terminal mobile avec un système de localisation de terminaux mobiles selon l'une quelconque des revendications 1 à 3, le procédé comprenant :
- une étape de transfert d'une pluralité d'enregistrements de carnet d'adresses depuis un terminal mobile à synchroniser à un serveur d'enregistrement, au moins un desdits enregistrements de carnet d'adresses comportant un identifiant de terminal mobile contact;
- une étape de tri de carnet d'adresses pour déterminer, pour chaque enregistrement de carnet d'adresses comportant un identifiant de terminal mobile contact, si la base de données de terminaux mobiles d'un serveur de localisation comporte un enregistrement de terminal mobile comprenant des données d'adresse du terminal mobile contact, pour définir des informations de terminal mobile contact ; et
- une étape de mise à jour comportant la transmission des informations de terminal mobile contact au terminal mobile à synchroniser.

## Patentansprüche

1. System zur Lokalisierung von Mobilfunkendgeräten, das mehrere Registrierungsserver und mehrere Lokalisierungsserver aufweist,
wobei jeder Registrierungsserver angepasst ist, mit mehreren Mobilfunkendgeräten, die bei diesem Registrierungsserver registriert sind, zum Zwecke einer Kommunikationsvermittlung zu kommunizieren,
wobei die Registrierungsserver und die Lokalisierungsserver untereinander über ein erweitertes Netz kommunizieren können und in einer hierarchischen Baumstruktur organisiert sind, die aus Vaterservern und Sohnservern gebildet ist, so dass
- jeder Registrierungsserver einen einzigen Vaterserver hat, der ein Lokalisierungsserver ist;
- jeder Lokalisierungsserver entweder einen einzigen Vaterserver, der ein Lokalisierungsserver ist, oder keinen Vaterserver hat;
- mindestens ein Lokalisierungsserver der mehreren Lokalisierungsserver einen Vaterserver hat; und
- jeder Lokalisierungsserver eine Mobilfunkendgeräte-Datenbank, die an mehreren Mo-bilfunkendgerät-Datensätzen gebildet ist, aufweist, wobei jeder Mobilfunkendgerät-Datensatz Adressdaten eines Mobilfunkendgeräts aufweist, das bei einem Registrierungsserver registriert ist, der in der hierarchischen Baumstruktur unterhalb des Lokalisierungsservers angeordnet ist,
**dadurch gekennzeichnet, dass** ein Lokalisierungsserver, der Vater in der hierarchischen Baumstruktur ist, alle Datensätze aufweist, die in einem Lokalisierungs- oder Registrierungsserver, die in der hierarchischen Baumstruktur unterhalb des Vater-Lokalisierungsservers sind, enthalten sind.

2. System nach Anspruch 1, wobei die Adressdaten eines Mobilfunkendgeräts eine auf das erweiterte Netz bezogene Adresse eines Registrierungsservers, bei welchem das Mobilfunkendgerät registriert ist, aufweisen.

3. System nach einem der Ansprüche 1 und 2, in welchem ein einziger Lokalisierungsserver keinen Vaterserver aufweist und einen Wurzel-Lokalisierungsserver bildet.

4. Verfahren zur Lokalisierung eines Mobilfunkendgeräts mit Hilfe eines Registrierungsservers eines Systems zur Lokalisierung von Mobilfunkendgeräten nach einem der Ansprüche 1 bis 3, wobei das Verfahren aufweist: eine lokale Bestimmung, in welchem bestimmt wird, ob ein gesuchtes Mobilfunkendgerät bei einem Registrierungsserver registriert ist, und, falls das gesuchte Mobilfunkendgerät nicht bei dem Registrierungsserver registriert ist, einen ersten regionalen Bestimmungsschritt, in welchem bestimmt wird, ob die Mobilfunkendgeräte-Datenbank eines ersten Lokalisierungsservers, der der einzige Vaterserver des Registrierungsservers ist, einen Mobilfunkendgerät-Datensatz mit den Adressdaten des gesuchten Mobilfunkendgeräts aufweist; und
- falls die Mobilfunkendgeräte-Datenbank des ersten Lokalisierungsservers einen Mobilfunkendgerät-Datensatz mit den Adressdaten des gesuchten Mobilfunkendgeräts aufweist, der erste Lokalisierungsserver den Datensatz zu dem Registrierungsserver überträgt;
- falls die Mobilfunkendgeräte-Datenbank des ersten Lokalisierungsservers keinen Mobilfunkendgerät-Datensatz mit den Adressdaten des gesuchten Mobilfunkendgeräts aufweist, einen zweiten regionalen Bestimmungsschritt, in welchem bestimmt wird, ob die Datenbank eines zweiten Lokalisierungsservers, der der einzige Vaterserver des ersten Lokalisierungsservers ist, einen Mobilfunkendgerät-Datensatz mit den Adressdaten des gesuchten Mobilfunkendgeräts aufweist.

5. Verfahren zur Lokalisierung eines Mobilfunkendgeräts nach Anspruch 4, in welchem
der zweite regionale Bestimmungsschritt unter Aufsteigen in der hierarchischen Baumstruktur ein oder mehrere Male wiederholt wird, wobei die Gesamtheit der regionalen Bestimmungsschritte eine Gesamtheit von n-ten regionalen Bestimmungsschritten bildet,
in jedem n-ten regionalen Bestimmungsschritt bestimmt wird, ob die Mobilfunkendgeräte-Datenbank eines n-ten Lokalisierungsservers, der der einzige Vaterserver eines (n-1)-ten Servers ist, einen Mobilfunkendgerät-Datensatz mit den Adressdaten des gesuchten Mobilfunkendgeräts aufweist,
wobei die Wiederholung der n-ten regionalen Bestimmungsschritte beendet wird, wenn die Mobilfunkendgeräte-Datenbank eines n-ten Lokalisierungsservers einen Mobilfunkendgerät-Datensatz mit den Adressdaten des gesuchten Mobilfunkendgeräts aufweist.

6. Verfahren zur Lokalisierung eines Mobilfunkendgeräts nach Anspruch 4 oder 5, in welchem für den Fall, dass im Verlaufe eines (n-1)-ten regionalen Bestimmungsschritts das gesuchte Mobilfunkendgerät nicht bei einem (n-1)-ten Lokalisierungsserver registriert ist, der (n-1)-te Lokalisierungsserver eine Lokalisierungsanfrage zu dem n-ten Lokalisierungsserver, der sein einziger Vaterserver ist, sendet.

7. Verfahren zur Lokalisierung eines Mobilfunkendgeräts nach Anspruch 4 oder 5, in welchem für den Fall, dass im Verlaufe eines (n-1)-ten regionalen Bestimmungsschritts das gesuchte Mobilfunkendgerät nicht bei einem (n-1)-ten Lokalisierungsserver registriert ist, der (n-1)-te Lokalisierungsserver eine auf das erweiterte Netz bezogene Adresse des n-ten Lokalisierungsservers, der sein einziger Vaterserver ist, zu dem Registrierungsserver sendet und der Registrierungsserver eine Lokalisierungsanfrage zu dem n-ten Lokalisierungsserver sendet.

8. Verfahren zur Lokalisierung eines Mobilfunkendgeräts nach einem der Ansprüche 4 bis 7, in welchem
für den Fall, dass die Mobilfunkendgeräte-Datenbank eines Lokalisierungsservers einen Mobilfunkendgerät-Datensatz mit den Adressdaten des gesuchten Mobilfunkendgeräts aufweist, eine lokale Datenbank des Registrierungsservers unter Verwendung dieses Mobilfunkendgerät-Datensatzes aktualisiert wird, und
der lokale Bestimmungsschritt, in welchem bestimmt wird, ob ein gesuchtes Mobilfunkendgerät bei einem Registrierungsserver registriert ist, außerdem einen Schritt aufweist, in welchem bestimmt wird, ob die lokale Datenbank des Registrierungsservers einen Mobilfunkendgerät-Datensatz mit den Adressdaten des gesuchten Mobilfunkendgeräts aufweist.

9. Verfahren zum Registrieren eines Mobilfunkendgeräts in einem System zur Lokalisierung von Mobilfunkendgeräten nach einem der Ansprüche 1 bis 3, wobei das Verfahren aufweist:
- einen lokalen Registrierungsschritt, in welchem eine lokale Registrierung eines zu registrierenden Mobilfunkendgeräts bei einem Registrierungsserver durchgeführt wird;
- einen ersten regionalen Registrierungsschritt, in welchem eine regionale Registrierung des zu registrierenden Mobilfunkendgeräts in der Mobilfunkendgeräte-Datenbank eines ersten Lokalisierungsservers, der der einzige Vaterserver des Registrierungsservers ist, durchgeführt wird; und
- einen zweiten regionalen Registrierungsschritt, in welchem eine regionale Registrierung des zu registrierenden Mobilfunkendgeräts in der Mobilfunkendgeräte-Datenbank eines zweiten Lokalisierungsservers, der der einzige Vaterserver des ersten Lokalisierungsservers ist, durchgeführt wird,
wobei das Verfahren außerdem einen Zuordnungsschritt aufweist, welcher vor dem ersten Registrierungsschritt durchgeführt wird und in welchem das Mobilfunkendgerät eine Zuordnungsanfrage zu einem Lokalisierungsserver sendet und anschließend das Mobilfunkendgerät eine auf das erweiterte Netz bezogene Adresse eines Registrierungsservers empfängt,
wobei der lokale Registrierungsschritt die Registrierung des Mobilfunkendgeräts bei dem Registrierungsserver aufweist.

10. Verfahren zum Registrieren eines Mobilfunkendgeräts nach Anspruch 9,
in welchem der zweite Registrierungsschritt unter Aufsteigen in der hierarchischen Baumstruktur ein oder mehrere Male wiederholt wird, wobei die Gesamtheit der regionalen Registrierungsschritte eine Gesamtheit von n-ten regionalen Registrierungsschritten bildet,
jeder n-te regionale Registrierungsschritt darin besteht, das zu registrierende Mobilfunkendgerät in der Mobilfunkendgeräte-Datenbank eines n-ten Lokalisierungsservers, der der einzige Vaterserver eines (n-1)-ten Lokalisierungsservers ist, zu registrieren,
wobei die Wiederholung der n-ten regionalen Registrierungsschritte beendet wird, wenn ein n-ter Lokalisierungsserver keinen Vaterserver hat.

11. Verfahren zum Registrieren eines Mobilfunkendgeräts nach einem der Ansprüche 9 oder 10,
in welchem jeder regionale Registrierungsschritt das Senden einer Anfrage zum Registrieren eines Mobilfunkendgeräts von einem ersten Server zu einem zweiten Server aufweist, der der einzige Vaterserver des ersten Servers ist.

12. Verfahren zum Registrieren eines Mobilfunkendgeräts nach einem der Ansprüche 9 oder 10,
in welchem jeder regionale Registrierungsschritt das Senden einer Anfrage zum Registrieren eines Mobilfunkendgeräts von dem Registrierungsserver zu einem Lokalisierungsserver aufweist.

13. Verfahren zum Synchronisieren eines Mobilfunkendgeräts unter Verwendung eines Systems zur Lokalisierung von Mobilfunkendgeräten nach einem der Ansprüche 1 bis 3, wobei das Verfahren aufweist:
- einen Übertragungsschritt, in welchem mehrere Datensätze eines Adressbuchs von einem zu synchronisierenden Mobilfunkendgerät zu einem Registrierungsserver übertragen werden, wobei mindestens einer der Adressbuch-Datensätze einen Identifikator des Kontakt-Mobilfunkendgeräts aufweist;
- einen Adressbuch-Sichtungsschritt, in welchem für jeden Datensatz des Adressbuchs, der einen Identifikator des Kontakt-Mobilfunkendgeräts aufweist, bestimmt wird, ob die Mobilfunkendgeräte-Datenbank eines Lokalisierungsservers einen Mobilfunkendgerät-Datensatz mit Adressdaten des Kontakt-Mobilfunkendgeräts aufweist, um Daten des Kontakt-Mobilfunkendgeräts zu definieren; und
- einen Aktualisierungsschritt, in welchem Daten des Kontakt-Mobilfunkendgeräts zu dem zu synchronisierenden Mobilfunkendgerät gesendet werden.

## Claims

1. System for locating mobile terminals comprising a plurality of recording servers and a plurality of location servers,
each recording server adapted to communicate with a plurality of mobile terminals recorded with said recording server, for a communication relay,
with the recording servers and the location servers able to communicate between them via an extended network and organised in a hierarchical tree of parent servers and child servers in such a way that:
- each recording server has a single parent server constituted by a location server;
- each location server has either a single parent server constituted by a location server, or no parent server;
- at least one location server among the plurality of location servers has a parent server; and
each location server comprising a database of mobile terminals constituted of a plurality of mobile terminal records, each of said mobile terminal records comprising address data of a mobile terminal recorded with a descending recording server of said location server in the hierarchical tree,
**characterized in that** a location server, parent in the hierarchical tree, comprises all of the records contained in a recording or location server, downstream of said parent location server in the hierarchical tree.

2. System according to claim 1, wherein the address data of a mobile terminal includes an address, over the extended network, of a recording server with which is recorded said mobile terminal.

3. System according to any of claims 1 and 2, wherein a single location server does not have a parent server and constitutes a root location server.

4. Method for locating a mobile terminal by a recording server of a system for locating mobile terminals according to any of claims 1 to 3, with the method comprising a local determination in order to determine if a mobile terminal sought is recorded with a recording server, and, if the mobile terminal sought is not recorded with the recording server, a first step of regional determination in order to determine if the database of mobile terminals of a first location server constituting the single parent server of the recording server comprises a mobile terminal record comprising address data of the mobile terminal sought; and
- if the database of mobile terminals of the first location server comprises a mobile terminal record comprising address data of the mobile terminal sought, the first location server transmits said record to the recording server;
- if the database of mobile terminals of the first location server does not comprise a mobile terminal record comprising address data of the mobile terminal sought, a second step of regional determination consisting in determining if the database of mobile terminals of a second location server constituting the single parent server of the first location server comprises a mobile terminal record comprising address data of the mobile terminal sought.

5. Method for locating a mobile terminal according to claim 4,
wherein the second step of regional determination is reiterated one or several times by going back up the hierarchical tree structure, with all of the steps of regional determination constituting a set of n-th steps of regional determination,
each n-th step of regional determination consisting in determining if the database of mobile terminals of an n-th location server constituting the single parent server of a (n-1)-th server comprises a mobile terminal record comprising address data of the mobile terminal sought,
the reiteration of the n-th steps of regional determination being stopped when the database of mobile terminals of an n-th location server comprises a mobile terminal record comprising address data of the mobile terminal sought.

6. Method for locating a mobile terminal according to claim 4 or 5, wherein if the mobile terminal sought is not recorded with an (n-1)-th location server during an (n-1)-th step of regional determination,
the n-1-th location server transmits to the n-th location server, constituting its single parent, a location request.

7. Method for locating a mobile terminal according to claim 4 or 5, wherein if the mobile terminal sought is not recorded with an (n-1)-th location server during an (n-1)-th step of regional determination,
the (n-1)-th location server transmits to the recording server an address, over the extended network, of the n-th location server constituting its single parent, and the recording server emits a location request to the n-th location server.

8. Method for locating a mobile terminal according to any of claims 4 to 7, wherein, when the database of mobile terminals of a location server comprises a mobile terminal record comprising address data of the mobile terminal sought, a local database of the recording server is updated with said mobile terminal record and,
the step of local determination in order to determine if a mobile terminal sought is recorded with a recording server further comprises the operation of determining if the local database of the recording server comprises a mobile terminal record comprising address data of the mobile terminal sought.

9. Method for recording a mobile terminal in a system for locating mobile terminals according to any of claims 1 to 3, with the method comprising:
- a step of local recording of a mobile terminal to be recorded with a recording server;
- a first step of regional recording of the mobile terminal to be recorded in the database of mobile terminals of a first location server constituting the single parent server of the recording server; and
- a second step of regional recording of the mobile terminal to be recorded in the database of mobile terminals of a second location server constituting the single parent server of the first location server,
the method further comprising a step of assigning, carried out prior to the first step of recording, and comprising the transmission of a request for assigning from the mobile terminal to a location server then the receiving on the mobile terminal of an address, over the extended network, of a recording server,
wherein the step of local recording comprises the recording of the mobile terminal with said recording server.

10. Method for recording a mobile terminal according to claim 9,
wherein the second step of recording is reiterated one or several times by going back up the hierarchical tree structure, with all of the steps of regional recording constituting a set of n-th steps of regional recording,
each n-th step of regional recording consisting in recording the mobile terminal to be recorded in the database of mobile terminals of an n-th location server constituting the single parent server of an n-1-th location server,
with the reiteration of the n-th steps of regional recording being stopped when an n-th location server does not have a parent server.

11. Method for recording a mobile terminal according to one of claims 9 or 10, wherein each step of regional recording comprises the emission of a recording request for a mobile terminal from a first server to the second server constituting the single parent of said first server.

12. Method for recording a mobile terminal according to one of claims 9 or 10, wherein each step of regional recording comprises the emission of a recording request for a mobile terminal from the recording server to a location server.

13. Method of synchronising a mobile terminal with a system for locating mobile terminals according to any of claims 1 to 3, with the method comprising:
- a step of transferring a plurality of address book records from a mobile terminal to be synchronised to a recording server, with at least one of said address book records comprising a mobile terminal contact identifier;
- a step of sorting the address book in order to determine, for each address book record comprising a mobile terminal contact identifier, if the database of mobile terminals of a location server comprises a mobile terminal record comprising address data of the mobile terminal contact, in order to define mobile terminal contact information; and
- a step of updating comprising the transmission of the mobile terminal contact information to the mobile terminal to be synchronised.
